# EUROPÄISCHE PATENTSCHRIFT

(11) **EP 3 380 376 B1**
(45) Veröffentlichungstag und Bekanntmachung des Hinweises auf die Patenterteilung: **15.01.2020**
(21) Anmeldenummer: 16805350.2
(22) Anmeldetag: 25.11.2016
(51) Int. Cl.: B60T 13/66

(54) **VERFAHREN UND VORRICHTUNG ZUM BETREIBEN EINES BREMSSYSTEMS FÜR EIN FAHRZEUG UND BREMSSYSTEM**
METHOD AND EQUIPMENT FOR ACTUATING A BRAKING SYSTEM FOR A VEHICLE AND BRAKING SYSTEM
PROÉDÉ ET APPAREIL POUR ACTUER LE DISPOSITIF DE FREINAGE POUR UN VÉHICULE ET UN TEL DISPOSITIF DE FREINAGE

(30) Priorität: 27.11.2015 DE 102015120588
(43) Veröffentlichungstag der Anmeldung: 03.10.2018
(73) Patentinhaber: KNORR-BREMSE Systeme für Nutzfahrzeuge GmbH, 80809 München (DE)
(72) Erfinder: WERNER, Frank, 71254 Ditzingen (DE)
(86) Internationale Anmeldenummer: PCT/EP2016/078783
(87) Internationale Veröffentlichungsnummer: WO 2017/089521

(56) Entgegenhaltungen:
- WO-A1-2014/063720
- WO-A1-2015/036393
- JP-A- 2008 126 962

## Beschreibung

Die Erfindung geht aus von einer Vorrichtung oder einem Verfahren nach Gattung der unabhängigen Ansprüche.

Bei einem elektronischen Bremssystem für ein Nutzfahrzeug werden Pneumatikventile zu Bremszylindern der einzelnen Achsen beziehungsweise Räder des Nutzfahrzeugs durch elektrische Signale angesteuert. Für den Fall, dass ein Defekt im Bremssystem auftritt, weist das elektronische Bremssystem eine redundante Möglichkeit zum Ansteuern der Bremszylinder auf. Die Pneumatikventile können dann direkt über Druckluftsignale betätigt werden, um das Nutzfahrzeug zum Stehen zu bringen.

Durch die redundante Ausführung sind die Komponenten des Bremssystems mechanisch komplex und somit teuer. Es wird ein komplettes Reservebremssystem vorgehalten, um im Fehlerfall das Nutzfahrzeug einmal bis zum Stillstand abzubremsen.

WO 2015/036393 A1 offenbart ein Verfahren zum Betrieb eines Kraftfahrzeugs, das eine Betriebsbremse und eine Parkbremse aufweist. Bei Identifikation eines Fehler der Betriebsbremsanlage übernimmt die Parkbremse die Verzögerungsanforderungen.

JP 2008 1 26962 A offenbart eine Parkbremssteuervorrichtung für ein Kraftfahrzeugs. Wenn die Betriebsbremse außer Betrieb ist kann die Parkbremse zum Bremsen verwendet werden.

Vor diesem Hintergrund werden mit dem hier vorgestellten Ansatz ein Verfahren zum Betreiben eines Bremssystems für ein Fahrzeug mit einer Betriebsbremsvorrichtung und einer Parkbremsvorrichtung, weiterhin eine Vorrichtung, die dieses Verfahren verwendet, sowie schließlich ein Bremssystem gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Durch den hier vorgestellten Ansatz kann eine ebenso im Nutzfahrzeug verbaute Feststellbremse beziehungsweise Parkbremse verwendet werden, um das Nutzfahrzeug abzubremsen. Dadurch können die Komponenten des Bremssystems vereinfacht werden und somit Ressourcen und Kosten gespart werden. Insbesondere kann bei einem Fehler im elektronischen Bremssystem eine elektropneumatische Feststellbremse beziehungsweise elektropneumatische Parkbremse verwendet werden, um das Nutzfahrzeug zum Stehen zu bringen.

Es wird ein Verfahren zum Betreiben eines Bremssystems für ein Fahrzeug mit einer Betriebsbremsvorrichtung und einer Parkbremsvorrichtung vorgestellt, wobei das Verfahren die folgenden Schritte aufweist:
Einlesen eines, eine Verzögerungsanforderung für das Fahrzeug repräsentierenden Verzögerungssignals für die Betriebsbremsvorrichtung und eines, eine Funktionsfähigkeit der Betriebsbremsvorrichtung repräsentierenden Funktionssignals; und
Bereitstellen eines Betätigungssignals für die Parkbremsvorrichtung unter Verwendung des Verzögerungssignals, wenn das Funktionssignal eine zumindest eingeschränkte Funktionsfähigkeit der Betriebsbremsvorrichtung signalisiert.

Unter einem Fahrzeug kann ein Nutzfahrzeug, insbesondere ein Bus, ein Lastkraftwagen oder eine Zugmaschine verstanden werden. Eine Betriebsbremsvorrichtung kann ein elektronisches Bremssystem des Fahrzeugs sein. Das Fahrzeug kann einen durch das Betriebsbremssystem gebremsten Anhänger beziehungsweise Auflieger aufweisen. Eine Parkbremsvorrichtung kann eine elektropneumatische Feststellbremse des Fahrzeugs sein. Ein Verzögerungssignal kann ein elektrisches Signal sein. Das Verzögerungssignal kann ausgebildet sein, um die Verzögerungsanforderung repräsentierende Daten oder Werte zu übertragen. Eine Verzögerungsanforderung kann ein Sollwert für eine Bremsleistung am Fahrzeug sein. Die Verzögerungsanforderung kann von einem Assistenzsystem des Fahrzeugs bereitgestellt werden. Die Verzögerungsanforderung kann auch über ein Bremspedal des Fahrzeugs erfasst werden. Ein Funktionssignal kann ein elektrisches Signal sein. Das Funktionssignal kann von einer Überwachungseinrichtung der Betriebsbremsvorrichtung eingelesen werden. Das Funktionssignal kann auf von einer Sensoreinrichtung bereitgestellten Daten basieren. Eine eingeschränkte Funktionsfähigkeit kann beispielsweise durch einen Defekt hervorgerufen werden. Ein Betätigungssignal kann ein elektrisches Signal sein. Das Betätigungssignal kann ausgebildet sein, um die Verzögerungsanforderung repräsentierende Daten oder Werte zu übertragen. Das Betätigungssignal kann somit die Verzögerungsanforderung abbilden.

Das Betätigungssignal kann für eine Hinterachsparkbremseinrichtung der Parkbremsvorrichtung zum Bremsen einer Hinterachse des Fahrzeugs bereitgestellt werden, wenn das Funktionssignal eine eingeschränkte Funktionsfähigkeit einer Hinterachsbetriebsbremseinrichtung der Betriebsbremsvorrichtung an der Hinterachse signalisiert. Entsprechend kann das Betätigungssignal für eine Vorderachsparkbremseinrichtung der Parkbremsvorrichtung zum Bremsen einer Vorderachse des Fahrzeugs bereitgestellt werden, wenn das Funktionssignal eine eingeschränkte Funktionsfähigkeit einer Vorderachsbetriebsbremseinrichtung der Betriebsbremsvorrichtung an der Vorderachse signalisiert. Das Betätigungssignal kann für eine Anhängerparkbremseinrichtung der Parkbremsvorrichtung zum Bremsen eines Anhängers des Fahrzeugs bereitgestellt werden, wenn das Funktionssignal eine eingeschränkte Funktionsfähigkeit einer Anhängerbetriebsbremseinrichtung der Betriebsbremsvorrichtung des Anhängers signalisiert. Bremseinrichtungen können elektropneumatische Ventile sein. Die Bremseinrichtungen für die Vorderachse, die Hinterachse und den Anhänger können entweder gemeinsam und/oder selektiv angesteuert werden. Dadurch kann eine Dosierbarkeit der Betriebsbremsvorrichtung erhalten werden, da geziehlt dort auf die Parkbremsvorrichtung ausgewichen werden kann, wo ein Defekt vorliegt.

Im Schritt des Bereitstellens kann unter Verwendung des Verzögerungssignals ein Betriebsbremssignal für die Betriebsbremsvorrichtung bereitgestellt werden, wenn das Funktionssignal die bestimmungsgemäße Funktionsfähigkeit der Betriebsbremsvorrichtung signalisiert. Dadurch kann die Verzögerungsanforderung dann an die Betriebsbremsvorrichtung geleitet werden, wenn sie bestimmungsgemäß funktioniert.

Das Funktionssignal kann über eine Schnittstelle zu einem Steuergerät der Betriebsbremsvorrichtung eingelesen werden. Das Betätigungssignal kann über eine Schnittstelle zu einem Steuergerät der Parkbremsvorrichtung bereitgestellt werden. Über Schnittstellen kann ein modulares System erstellt werden. Somit kann die Funktionalität des beschriebenen Verfahrens in einer eigenständigen Einheit umgesetzt sein. Alternativ kann die entsprechende Funktionalität auch in ein bereits vorhandenes Steuergerät, beispielsweise das Steuergerät der Betriebsbremsvorrichtung oder das Steuergerät der Parkbremsvorrichtung, integriert werden.

Im Schritt des Bereitstellens kann ein Parkbremssignal für die Parkbremsvorrichtung bereitgestellt werden, wenn das Verzögerungssignal eine Parkbremsanforderung signalisiert. Dadurch kann das Fahrzeug im Stand festgestellt werden, damit es nicht rollt. Ein separates Aktivieren der Parkbremsvorrichtung kann entfallen.

Das Verzögerungssignal wird über eine Schnittstelle zu einem Fußbremsmodul der Betriebsbremsvorrichtung eingelesen werden. Über Schnittstellen kann ein modulares System erstellt werden. Gemäß der Erfindung umfasst das Verfahren ferner einen Schritt des Erfassens des Verzögerungssignals unter Verwendung des Fußbremsmoduls.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden. Unter einer Vorrichtung kann vorliegend ein elektrisches Gerät verstanden werden, das ausgebildet ist, um Sensorsignale zu verarbeiten und in Abhängigkeit davon Steuer- und/oder Datensignale auszugeben. Die Vorrichtung kann eine hard- und/oder softwaremäßig ausgebildete Schnittstelle aufweisen.

Weiterhin wird ein Bremssystem für ein Fahrzeug mit einer Betriebsbremsvorrichtung und einer Parkbremsvorrichtung vorgestellt, wobei die Betriebsbremsvorrichtung und die Parkbremsvorrichtung über Schnittstellen mit einer Vorrichtung zum Betreiben des Fahrzeugs gemäß dem hier vorgestellten Ansatz verbunden sind.

Ausführungsbeispiele der Erfindung sind in den Zeichnungen dargestellt und in der nachfolgenden Beschreibung näher erläutert. Es zeigt:
- Fig. 1: eine Darstellung eines Nutzfahrzeugs mit einem Bremssystem gemäß einem Ausführungsbeispiel;
- Fig. 2: ein Blockschaltbild einer Vorrichtung zum Betreiben eines Fahrzeugs gemäß einem Ausführungsbeispiel; und
- Fig. 3: ein Ablaufdiagramm eines Verfahrens zum Betreiben eines Fahrzeugs gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

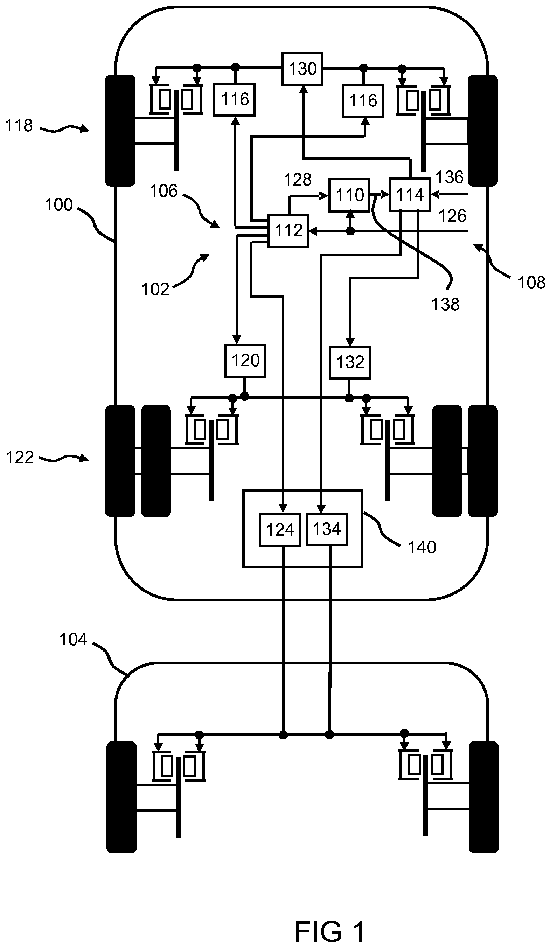

**Fig. 1** zeigt eine Darstellung eines Nutzfahrzeugs 100 mit einem Bremssystem 102 gemäß einem Ausführungsbeispiel. Das Nutzfahrzeug 100 ist hier ein Lastkraftwagen 100. Das Nutzfahrzeug 100 zieht einen Anhänger 104. Das Nutzfahrzeug 100 kann auch eine Zugmaschine sein. Dann kann die Zugmaschine mit einem Auflieger gekoppelt sein. Räder des Nutzfahrzeugs 100 werden durch Druckluftbremsen gebremst. Das Nutzfahrzeug 100 weist hier an allen Rädern pneumatische Scheibenbremsen auf. Das Nutzfahrzeug 100 kann auch Trommelbremsen aufweisen. Ebenso kann das Nutzfahrzeug 100 eine Mischung aus Scheibenbremsen und Trommelbremsen aufweisen. Das Bremssystem 102 umfasst eine Betriebsbremsvorrichtung 106, eine Parkbremsvorrichtung 108 sowie eine Vorrichtung 110 zum Betreiben des Bremssystems 102 für das Nutzfahrzeug 100. Die Vorrichtung 110 ist mit einem Steuergerät 112 der Betriebsbremsvorrichtung 106 und einem Steuergerät 114 der Parkbremsvorrichtung 108 verbunden.

Gemäß einem Ausführungsbeispiel ist die Vorrichtung 110 als eine eigenständige Einheit ausgeführt, die über Schnittstellen mit den Steuergeräten 112, 114 verbunden ist. Dies hat den Vorteil, dass die Vorrichtung 110 beispielsweise bei einem vollsändigen Ausfall des Steuergeräts 112 der Betriebsbremsvorrichtung 106 noch einsatzbereit ist. Gemäß alternativen Ausführungsbeispielen ist die Vorrichtung 110 in eines der Steuergeräte 112, 114 integriert. Durch eine solche Integration kann die Funktionalität der Vorrichtung 110 kostengünstig in ein bekanntes System integriert werden.

Die Betriebsbremsvorrichtung 106 umfasst neben dem Steuergerät 112 zwei Einrichtungen 116 zum Betätigen der Bremsen an der Vorderachse 118, eine Einrichtung 120 zum Betätigen der Bremsen an der Hinterachse 122 sowie eine Einrichtung 124 zum Betätigen der Bremsen des Anhängers 104. Die Einrichtungen 116 zum Betätigen der Bremsen an der Vorderachse 118 können als Vorderachsbetriebsbremseinrichtungen 116 bezeichnet werden. Die Einrichtung 120 zum Betätigen der Bremsen an der Hinterachse 122 kann als Hinterachsbetriebsbremseinrichtung 120 bezeichnet werden. Die Einrichtung 124 zum Betätigen der Bremsen des Anhängers 104 kann als

Anhängerbetriebsbremseinrichtung 124 bezeichnet werden. Die Einrichtungen 116, 120, 124 sind elektronisch ansteuerbare pneumatische Ventile, wobei eine Druckluftversorgung der Ventile 116, 120, 124 hier nicht dargestellt ist. Das Steuergerät 112 sendet ansprechend auf ein Verzögerungssignal 126 elektrische Steuersignale über Steuerleitungen an die Ventile 116, 120, 124, um sie zu öffnen oder zu schließen. Das Verzögerungssignal 126 bildet eine gewünschte Verzögerung für das Nutzfahrzeug 100 beziehungsweise das Gespann ab. Das Verzögerungssignal 126 wird beispielsweise unter Verwendung eines Fußbremsmoduls des Nutzfahrzeugs 100 eingelesen. Das Verzögerungssignal 126 kann auch durch ein Fahrerassistenzsystem des Nutzfahrzeugs 100 bereitgestellt werden, beispielsweise um durch ein Abbremsen des Gespanns einen Sicherheitsabstand zu einem vorausfahrenden Fahrzeug einzuhalten.

Das Steuergerät 112 ist ausgebildet, um über die Steuerleitungen einen Status der Einrichtungen 116, 120, 124 abzufragen. Ferner ist das Steuergerät 112 ausgebildet um den Status der Einrichtungen 116, 120, 124 auszuwerten und ein Funktionssignal 128 zu generieren. Das Funktionssignal 128 bildet eine Funktionsfähigkeit der Betriebsbremsvorrichtung 106 ab. Das Funktionssignal 128 wird an die Vorrichtung 110 gesendet.

Die Parkbremsvorrichtung 108 umfasst neben dem Steuergerät 114 eine Einrichtung 130 zum Betätigen der Bremsen an der Vorderachse 118, eine Einrichtung 132 zum Betätigen der Bremsen an der Hinterachse 122 sowie eine Einrichtung 134 zum Betätigen der Bremsen des Anhängers 104. Die Einrichtung 130 zum Betätigen der Bremsen an der Vorderachse 118 kann als Vorderachsparkbremseinrichtung 130 bezeichnet werden. Die Einrichtung 132 zum Betätigen der Bremsen an der Hinterachse 122 kann als Hinterachsparkbremseinrichtung 132 bezeichnet werden. Die Einrichtung 134 zum Betätigen der Bremsen des Anhängers 104 kann als Anhängerparkbremseinrichtung 134 bezeichnet werden. Auch die Einrichtungen 130, 132, 134 können elektronisch ansteuerbare und/oder rein pneumatisch ansteuerbare Ventile sein. Die Druckluftversorgung der Ventile 130, 132, 134 ist hier nicht dargestellt. Im normalen Betrieb sendet das Steuergerät 114 ansprechend auf ein Parkbremssignal 136 elektrische Steuersignale über Steuerleitungen an die Ventile 130, 132, 134, um sie zu öffnen oder zu schließen. Das Parkbremssignal 136 bildet eine gewünschte Betätigung der Parkbremsvorrichtung 108 ab.

Die Einrichtungen 114 und 132 können gemäß einem Ausführungsbeispiel aus Kostengründen zu einer Parkbremsvorrichtung zusammengefasst werden, die nur die Hinterachse des Zugfahzeuges einbremst und zusammen mit dem Anhängersteuermodul 140 und der darin enthaltenen Einrichtung 134 auch den Anhänger bremst. Durch die zusätzliche Verwendung der Einrichtung 130 kann auch die Vorderachse wieder mit einbezogen werden.

Die Vorrichtung 110 ist ausgebildet, um das Verzögerungssignal 126 einzulesen und das Funktionssignal 128 auszuwerten. Unter Verwendung des Verzögerungssignals 126 und des Funktionssignals 128 wird von der Vorrichtung 110 ein Betätigungssignal 138 für die Parkbremsvorrichtung 108 bereitgestellt, wenn das Funktionssignal 128 eine zumindest eingeschränkte Funktionsfähigkeit beziehungsweise eine Störung der Betriebsbremsvorrichtung 106 signalisiert und das Verzögerungssignal 126 eine Verzögerungsanforderung signalisiert. Damit ist bei dem hier vorgestellten Bremssystem 102 die Parkbremsvorrichtung 108 redundant zur Betriebsbremsvorrichtung 106.

Das Verzögerungssignal 126 kann auch nur von der Vorrichtung 110 eingelesen werden. Dann kann die Vorrichtung 110 ein Betriebsbremssignal für die Betriebsbremsvorrichtung bereitstellen, wenn das Funktionssignal 128 die Funktionsfähigkeit der Betriebsbremsvorrichtung signalisiert. Somit wirkt die Vorrichtung 110 als Weiche für das Verzögerungssignal 126.

In einem Ausführungsbeispiel werden die Einrichtungen 130, 132, 134 an der Vorderachse 118, der Hinterachse 122 und/oder dem Anhänger 104 selektiv betätigt, wenn das Funktionssignal 128 einen Defekt an der Vorderachse 118, der Hinterachse 192 und/oder dem Anhänger 104 signalisiert.

Die Funktionalitäten der Einrichtungen 124, 134 sind gemäß einem Ausführungsbeispiel in einem als Anhängersteuermodul 140 bezeichneten Gerät zusammengefasst. Gemäß einem alternativen Ausführungsbeispiel sind die Einrichtungen 124, 134 als separate Module oder Geräte ausgeführt. Der Anhänger 104 weist ein eigenes durch die Einrichtungen 124, 134 ansteuerbares Bremssystem auf.

Im Foglenden werden Ausführungsbeispiele des beschriebenen Ansatzes detailiert anhand von Fig. 1 beschrieben. Insbesondere wird eine Verwendung der elektropneumatische Park/Feststellbremse (EPB) 108 eines Nutzfahrzeugs 100 als Back-up für das elektronische Bremssystem (EBS) 106 des Nutzfahrzeugs 100 beschrieben. Dadurch kann das typischerweise bisher bei einem Nutzfahrzeug 100 vorhandene pneumatische Back-up im elektronischen Bremssystem (EBS) 106 entfallen und durch die elektropneumatische Feststellbremse (EPB) 108 ersetzt werden.

Im Unterschied zu bisherigen elektronischen Bremssystemen, die als Rückfallebene für elektronische Defekte im Steuergerät 112, in den Aktuatoren 116, 120, 124 oder in der Sensorik einen pneumatischen Back-up haben, mit dem das Fahrzeug 100 auch bei Defekten im elektronischen Bremssystem 106 sicher bis zum Stillstand abgebremst werden kann, kann das hier beschriebene Bremssystem 102 weniger komplex und sicherer ausgeführt wrden. Insbesondere kann dabei gegebenenfalls sichergestellt werden, das selbt bei einer Funktionssörung Stabilitäts- und Sicherheitsfunktionen, wie Antiblockiersystem (ABS), Anti-Schlupf-Regelung (ASR), Dynamic Train Control (DTC) und elektronisches Stabilitätsprogramm (ESP) oder advanced emergency braking System (AEBS) noch zur Verfügung stehen.

Durch die Einführung einer elektropneumatischen Parkbremse 108 beziehungsweise Feststellbremse (EPB) 108 als selbstständiges elektronisches System kann die elektropneumatische Feststellbremse 108 bei dem hier vorgestellten Ansatz die Back-up-Funktion für das elektronische Bremssystem 106 übernehmen und der pneumatische Back-up kann im elektronischen Bremssystem entfallen, was zu einem erheblichen Kostenvorteil für zukünftige elektronische Bremssysteme führen kann. Das Fußbremsmodul (FBM) benötigt durch den hier vorgestellten Ansatz keinen oder nur noch einen pneumatischen Back-up. Im günstigsten Fall besteht das Fußbremsmodul nur noch aus einem rein elektronischen Teil. Ein mechanischer Teil kann für das Pedalgefühl vorgesehen werden.

Alle elektropneumatischen Module (EPM) (1K, 2K, 2C2K, 3K, ...) 116, 120 und Anhängersteuermodule (TCM) 124 benötigen keinen Back-up-Magneten und keinen Back-up-Kolben mehr. Die Konstruktion wird einfacher, leichter, kleiner und kostengünstiger.

Erfindungsgemäß verfügt das Fußbremsmodul über eine Elektronik, die über ein digitales Interface mit dem Steuergerät 112 des elektronischen Bremssystems 106 kommuniziert und von diesem auch elektrisch versorgt werden kann. Alternativ oder ergänzend kann die Elektronik von dem Steuergerät 114 der elektropneumatischen Parkbremse 108 elektrisch versorgt werden, beispielsweise wenn das Steuergerät 112 des elektronischen Bremssystems 106 aufgrund eines Fehlers abgeschaltet wird. Das Steuergerät 114 der elektropneumatischen Parkbremse 108 kann die Kommunikation über die vorhandene Schnittstelle oder eine redundante zweite digitale Schnittstelle übernehmen. Das heißt beide Steuergeräte 112, 114 können mit dem digitalen Fußbremsmodul kommunizieren, wobei das Steuergerät 114 der elektropneumatischen Parkbremse 108 nur dann mit dem digitalen Fußbremsmodul kommuniziert, wenn das Steuergerät 112 des elektronischen Bremssystems 106 nicht mehr "lebt", also die regelmäßig wiederkehrenden Überlebenssignale auf dem CAN-Bus nicht mehr kommen oder die Kommunikation an das Steuergerät 114 der elektropneumatischen Parkbremse 108 aktiv übergeben wird, weil beispielsweise ein Aktuator, wie ein elektropneumatisches Modul 116, 120, 124 defekt ist.

Das digitale Fußbremsmodul kann auch unabhängig von irgendwelchen Steuergeräten direkt mit Spannung versorgt werden. Beim komplett oder Teilausfall des Steuergeräts 112 des elektronischen Bremssystems 106 schaltet das digitale Fußbremsmodul automatisch oder nach Aufforderung auf die Kommunikation mit der elektropneumatischen Parkbremse 108 um. Die Kommunikation über das vorhandene oder zweite redundante digitale Interface kann mit dem elektronischen Bremssystem 106 und der elektropneumatischen Parkbremse 108 wie oben beschrieben ablaufen.

Die elektrische beziehungsweise elektropneumatische Feststellbremse 108 kann auf die Hinterachse 122, die Hinterachse 122 und die Vorderachse 118 sowie die Hinterachse 122, die Vorderachse 118 und weitere Achsen wirken und berücksichtigt auch den Anhänger 104.

Es sind auch Kombinationen von pneumatischem Back-up im elektronischen Bremssystem 106 und in der elektropneumatischen Parkbremse 108 möglich. Gemäß einem Ausführungsbeispiel wird die Vorderachse 118 über das elektronische Bremssystem 106 im Back-up Fall gebremst und die Hinterachse 122 wird über die elektropneumatische Parkbremse 108 oder umgekehrt gebremst. Das Anhängersteuermodul 124 kann über die elektropneumatische Parkbremse 108 oder über das elektronische Bremssystem 106 oder über beide angesteuert werden.

Die elektropneumatische Feststellbremse 108 kann auch mit Funktionalitäten wie ABS, ESP und AEBS erweitert werden. Dadurch können auch im Back-up Fall die Stabilitäts- und Sicherheitsfunktionen ganz, teilweise oder graduiert weiter zur Verfügung stehen.

Gleichzeitig bedeutet das, dass die Feststellbremse 108 nicht mehr nur über eine wie auch immer ausgeführte Handbetätigung aktiviert werden kann, sondern auch über das Fußbremspedal der Reibungsbremse oder über eine externe Anforderung z.B. von einem anderen Steuergerät.

Die Betätigung der Feststellbremse über die Human Control Unit (HCU) beziehungsweise den Handhebel durch den Fahrer bleibt gemäß einem Ausführungsbeispiel immer gewährleistet und wird durch geeignete Strategien sichergestellt, welche Betätigung im Falle einer Back-up-Situation höhere Priorität hat (Handhebel oder Bremspedal oder externe Anforderung) und ausgeführt wird.

Wird die Feststellbremse beispielsweise über das digitale Fußbremsmodul im Back-up Fall betätigt, kann das dem Fahrer auch über ein Display oder eine Warnlampe oder andere Warneinrichtungen angezeigt werden.

Die beschriebenen Funktionserweiterungen in der elektropneumatischen Feststellbremse 108 und im elektronischen Bremssystem 106 können auch beim autonomen Fahren sicherstellen, dass bei einem Totalausfall des elektronischen Bremssystems 106 das Fahrzeug 100 weiterhin automatisch ohne Fahrereingriffe zum Stillstand gebracht werden kann.

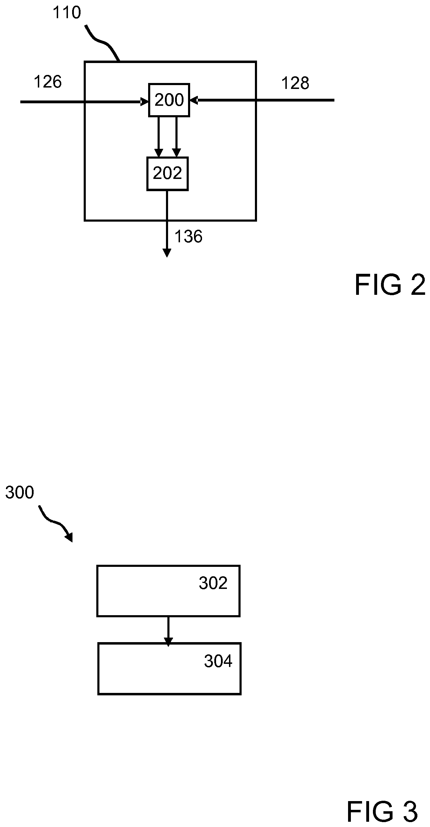

**Fig. 2** zeigt ein Blockschaltbild einer Vorrichtung 110 zum Betreiben eines Bremssystems eines Fahrzeugs gemäß einem Ausführungsbeispiel. Die Vorrichtung 110 entspricht dabei im Wesentlichen der Vorrichtung in Fig. 1. Die Vorrichtung 110 weist eine Einrichtung 200 zum Einlesen und eine Einrichtung 202 zum Bereitstellen auf. Die Einrichtung 200 zum Einlesen ist dazu ausgebildet, ein Verzögerungssignal 126 und ein Funktionssignal 128 einzulesen. Das Verzögerungssignal 126 repräsentiert eine Verzögerungsanforderung für eine Betriebsbremsvorrichtung des Fahrzeugs. Das Funktionssignal 128 bildet eine Funktionsfähigkeit der Betriebsbremsvorrichtung ab. Die Einrichtung 202 zum Bereitstellen ist dazu ausgebildet, unter Verwendung des Verzögerungssignals 126 ein Betätigungssignal 138 für eine Parkbremsvorrichtung des Fahrzeugs bereitzustellen, wenn das Funktionssignal 128 eine Einschränkung der Funktionsfähigkeit der Betriebsbremsvorrichtung signalisiert.

**Fig. 3** zeigt ein Ablaufdiagramm eines Verfahrens 300 zum Betreiben eines Bremssystems für ein Fahrzeug gemäß einem Ausführungsbeispiel. Das Verfahren 300 kann beispielsweise auf einer Vorrichtung, wie Sie in den Figuren 1 und 2 dargestellt ist ausgeführt werden. Das Verfahren 300 weist einen Schritt 302 des Einlesens und einen Schritt 304 des Bereitstellens auf. Im Schritt 302 des Einlesens werden ein eine Verzögerungsanforderung für eine Betriebsbremsvorrichtung des Fahrzeugs repräsentierendes Verzögerungssignal und ein eine Funktionsfähigkeit der Betriebsbremsvorrichtung abbildendes Funktionssignal eingelesen. Im Schritt 304 des Bereitstellens wird unter Verwendung des Verzögerungssignals ein Betätigungssignal für eine Parkbremsvorrichtung des Fahrzeugs bereitgestellt, wenn das Funktionssignal eine zumindest eingeschränkte Funktionsfähigkeit der Betriebsbremsvorrichtung signalisiert.

### BEZUGSZEICHENLISTE

- 100: Fahrzeug, Nutzfahrzeug
- 102: Bremssystem
- 104: Anhänger
- 106: elektronisches Bremssystem
- 108: elektropneumatische Parkbremse
- 110: Vorrichtung zum Betreiben des Nutzfahrzeugs
- 112: Steuergerät des elektronischen Bremssystems
- 114: Steuergerät der elektropneumatischen Parkbremse
- 116: Vorderachsbetriebsbremseinrichtung
- 118: Vorderachse
- 120: Hinterachsbetriebsbremseinrichtung
- 122: Hinterachse
- 124: Anhängerbetriebsbremseinrichtung
- 126: Verzögerungssignal
- 128: Funktionssignal
- 130: Vorderachsparkbremseinrichtung
- 132: Hinterachsparkbremseinrichtung
- 134: Anhängerparkbremseinrichtung
- 136: Parkbremssignal
- 138: Betätigungssignal
- 140: Anhängersteuermodul
- 200: Einrichtung zum Einlesen
- 202: Einrichtung zum Bereitstellen
- 300: Verfahren zum Betreiben eines Fahrzeugs
- 302: Schritt des Einlesens
- 304: Schritt des Bereitstellens

## Patentansprüche

1. Verfahren (300) zum Betreiben eines Bremssystems (102) für ein Fahrzeug (100) mit einem Steuergerät (112) einer Betriebsbremsvorrichtung (106) und einem Steuergerät (114) einer Parkbremsvorrichtung (108) und einem Fußbremsmodul, das über zumindest ein digitale Schnittstelle mit den Steuergeräten (112, 114) kommunizieren kann, wobei das Verfahren (300) die folgenden Schritte aufweist:
Einlesen (302) eines, eine Verzögerungsanforderung für das Fahrzeug (100) repräsentierenden Verzögerungssignals (126) für die Betriebsbremsvorrichtung (106) und eines, eine Funktionsfähigkeit der Betriebsbremsvorrichtung (106) repräsentierenden Funktionssignals (128), wobei das Verzögerungssignal (126) ein unter Verwendung des Fußbremsmoduls erfasstes elektrisches Signal repräsentiert, und wobei das Funktionssignal (128) ein von dem Steuergerät (112) der Betriebsbremsvorrichtung (106) generiertes und über die zumindest eine digitale Schnittstelle zu dem Steuergerät (112) der Betriebsbremsvorrichtung (106) eingelesenes elektrisches Signal repräsentiert; und
Bereitstellen (304) eines elektrischen Betätigungssignals (138) für die Parkbremsvorrichtung (108) unter Verwendung des Verzögerungssignals (126), wenn das Funktionssignal (128) eine zumindest eingeschränkte Funktionsfähigkeit der Betriebsbremsvorrichtung (106) signalisiert, wobei das elektrische Betätigungssignal (138) über die zumindest eine digitale Schnittstelle zu dem Steuergerät (114) der Parkbremsvorrichtung (108) bereitgestellt wird.

2. Verfahren (300) gemäß Anspruch 1, bei dem im Schritt (304) des Bereitstellens das Betätigungssignal (138) für eine Hinterachsparkbremseinrichtung (132) der Parkbremsvorrichtung (108) zum Bremsen einer Hinterachse (122) des Fahrzeugs (100) bereitgestellt wird, wenn das Funktionssignal (128) eine eingeschränkte Funktionsfähigkeit einer Hinterachsbetriebsbremseinrichtung (120) der Betriebsbremsvorrichtung (106) an der Hinterachse (122) signalisiert und/oder das Betätigungssignal (138) für eine Vorderachsparkbremseinrichtung (130) der Parkbremsvorrichtung (108) zum Bremsen einer Vorderachse (118) des Fahrzeugs (100) bereitgestellt wird, wenn das Funktionssignal (128) eine eingeschränkte Funktionsfähigkeit einer Vorderachsbetriebsbremseinrichtung (116) der Betriebsbremsvorrichtung (106) an der Vorderachse (118) signalisiert und/oder das Betätigungssignal (138) für eine Anhängerparkbremseinrichtung (134) der Parkbremsvorrichtung (108) zum Bremsen eines Anhängers (104) des Fahrzeugs (100) bereitgestellt wird, wenn das Funktionssignal (128) eine eingeschränkte Funktionsfähigkeit einer Anhängerbetriebsbremseinrichtung (124) der Betriebsbremsvorrichtung (106) des Anhängers (104) signalisiert.

3. Verfahren (300) gemäß einem der vorhergehenden Ansprüche, bei dem im Schritt (304) des Bereitstellens unter Verwendung des Verzögerungssignals (126) ein Betriebsbremssignal für die Betriebsbremsvorrichtung (106) bereitgestellt wird, wenn das Funktionssignal (128) die bestimmungsgemäße Funktionsfähigkeit der Betriebsbremsvorrichtung (106) signalisiert.

4. Verfahren (300) gemäß einem der vorhergehenden Ansprüche, bei dem im Schritt (304) des Bereitstellens ein Parkbremssignal für die Parkbremsvorrichtung (108) bereitgestellt wird, wenn das Verzögerungssignal (126) eine Parkbremsanforderung signalisiert.

5. Fußbremsmodul für ein Bremssystem (102) für ein Fahrzeug (100), wobei das Bremssystem (102) ein Steuergerät (112) einer Betriebsbremsvorrichtung (106) und ein Steuergerät (114) einer Parkbremsvorrichtung (108) umfasst, wobei das Fußbremsmodul (110) die folgenden Merkmale aufweist:
zumindest eine digitale Schnittstelle zum Kommunizieren mit den Steuergeräten (112, 114);
eine Einleseeinrichtung (200) zum Einlesen eines, eine Verzögerungsanforderung für das Fahrzeug (100) repräsentierenden Verzögerungssignals (126) für die Betriebsbremsvorrichtung (106) und eines, eine Funktionsfähigkeit der Betriebsbremsvorrichtung (106) repräsentierenden Funktionssignals (128), wobei das Verzögerungssignal (126) ein unter Verwendung des Fußbremsmoduls erfasstes elektrisches Signal repräsentiert, und wobei das Funktionssignal (128) ein von dem Steuergerät (112) der Betriebsbremsvorrichtung (106) generiertes und über die zumindest eine digitale Schnittstelle zu dem Steuergerät (112) der Betriebsbremsvorrichtung (106) eingelesenes elektrisches Signal repräsentiert; und eine Bereitstellungseinrichtung (202) zum Bereitstellen eines elektrischen Betätigungssignals (138) für die Parkbremsvorrichtung (108) unter Verwendung des Verzögerungssignals (126), wenn das Funktionssignal (128) eine zumindest eingeschränkte Funktionsfähigkeit der Betriebsbremsvorrichtung (106) signalisiert, wobei das elektrische Betätigungssignal (138) über die zumindest eine digitale Schnittstelle zu dem Steuergerät (114) der Parkbremsvorrichtung (108) bereitgestellt wird.

6. Bremssystem (102) für ein Fahrzeug (100), wobei das Bremssystem (102) die folgenden Merkmale aufweist:
eine Betriebsbremsvorrichtung (106);
eine Parkbremsvorrichtung (108); und
einem Fußbremsmodul gemäß Anspruch 5, wobei das Fußbremsmodul über Schnittstellen mit der Betriebsbremsvorrichtung (106) und der Parkbremsvorrichtung (108) verbunden ist.

## Claims

1. Method (300) for operating a brake system (102) for a vehicle (100) with a control unit (112) of a service brake mechanism (106) and a control unit (114) of a parking brake mechanism (108) and a footbrake module, which can communicate with the control units (112, 114) by way of at least one digital interface, such that the method (300) has the following steps:
reading-in (302) of a deceleration signal (126) that represents a deceleration demand for the vehicle (100) for the service brake mechanism (106) and a function signal (128) that represents a functional capability of the service brake mechanism (106), such that the deceleration signal (126) represents an electrical signal acquired using the footbrake module, and such that the function signal (128) represents an electrical signal generated by the control unit (112) of the service brake mechanism (106) and read-in via the at least one digital interface by the control unit (112) of the service brake mechanism (106), and
generation (304) of an electrical actuation signal (138) for the parking brake mechanism (108) on the basis of the deceleration signal (126), if the function signal (128) indicates an at least limited functional capability of the service brake mechanism (106), wherein the electrical actuation signal (138) is transmitted via the at least one digital interface to the control unit (114) of the parking brake mechanism (108).

2. Method (300) according to Claim 1, in which, in the generation step (304) the actuation signal (138) for a rear axle parking brake device (132) of the parking brake mechanism (108) for braking a rear axle (122) of the vehicle (100) is generated if the function signal (128) indicates a limited functional capability of a rear axle service brake device (120) of the service brake mechanism (106) on the rear axle, and/or the actuation signal (138) for a front axle parking brake device of the parking brake mechanism (108) for braking a front axle (118) of the vehicle (100) is generated if the function signal (128) indicates a limited functional capability of a front axle service brake device (116) of the service brake mechanism (106) on the front axle (118), and/or the actuation signal (138) for a trailer parking brake device (134) of the parking brake mechanism (108) for braking a trailer (104) of the vehicle (100) is generated if the function signal (128) indicates a limited functional capability of a trailer service brake device (124) of the service brake mechanism (106) of the trailer (104).

3. Method (300) according to either of the preceding claims, in which, in the generation step (304), a service brake signal for the service brake mechanism (106) is generated using the deceleration signal (126), if the function signal (128) indicates the specified functional capability of the service brake mechanism (106).

4. Method (300) according to any of the preceding claims, in which, in the generation step (304), a parking brake signal is generated for the parking brake mechanism (108) if the deceleration signal (126) indicates a parking brake request.

5. Footbrake module for a brake system (102) for a vehicle (100), such that the brake system (102) comprises a control unit (112) of a service brake mechanism (106) and a control unit (114) of a parking brake mechanism (108), the footbrake module (110) having the following characteristics:
at least one digital interface for communicating with the control units (112, 114);
a read-in device (200) for reading-in a deceleration signal (126) that represents a deceleration demand for the vehicle (100) for the service brake mechanism (106) and a function signal (128) that represents a functional capability of the service brake mechanism (106), wherein the deceleration signal (126) is an electrical signal acquired using the footbrake module and wherein the function signal (128) is an electrical signal generated by the control unit (112) of the service brake mechanism (106) and read-in via the at least one digital interface by the control unit (112) of the service brake mechanism (106); and
a generating device (202) for producing an electrical actuation signal (138) for the parking bake mechanism (108) on the basis of the deceleration signal (126), if the function signal (128) indicates an at least limited functional capability of the service brake mechanism (106), wherein the electrical actuation signal (138) is transmitted via the at least one digital interface to the control unit (114) of the parking brake mechanism (108).

6. Brake system (102) for a vehicle (100), the said brake system (102) having the following features:
a service brake mechanism (106);
a parking brake mechanism (108); and
a footbrake module according to Claim 5, such that the footbrake module is connected via interfaces to the service brake mechanism (106) and the parking brake mechanism (108).

## Revendications

1. Procédé (300) pour faire fonctionner un système (102) de frein d'un véhicule (100), comprenant un appareil (112) de commande d'un système (106) de frein de service et un appareil (114) de commande d'un système (108) de frein de stationnement et un module de frein à pied, qui peut communiquer avec les appareils (112, 114) de commande par au moins une interface numérique, le procédé (300) ayant les stades suivants :
lecture (302) d'un signal (126) de décélération du système (106) de frein de service, représentant une demande de décélération du véhicule (100), et d'un signal (128) de fonctionnement, représentant une aptitude à fonctionner du système (106) de frein de service, le signal (126) de décélération représentant un signal électrique détecté en utilisant le module de frein à pied et le signal (128) de fonctionnement représentant un signal électrique produit par l'appareil (112) de commande du système (106) de frein de service et lu, par l'intermédiaire de la au moins une interface numérique, pour l'appareil (112) de commande du système (106) de frein de service ; et
mise à disposition (304) d'un signal (138) d'actionnement électrique du système (108) de frein de stationnement, en utilisant le signal (126) de décélération, si le signal (128) de fonctionnement signale une aptitude à fonctionner au moins limitée du système (106) de frein de service, le signal (138) d'actionnement électrique étant mis à disposition, par l'intermédiaire de la au moins une interface numérique, pour l'appareil (114) de commande du système (108) de frein de stationnement.

2. Procédé (300) suivant la revendication 1, dans lequel, dans le stade (304) de la mise à disposition, on met à disposition le signal (138) d'actionnement d'un dispositif (132) de frein de stationnement d'essieu arrière du système (108) de frein de stationnement pour freiner un essieu (122) arrière du véhicule, si le signal (128) de fonctionnement signale une aptitude limitée à fonctionner d'un dispositif (120) de frein de service d'essieu arrière du système (106) de frein de service sur l'essieu (122) arrière et/ou on met à disposition le signal (138) d'actionnement d'un dispositif (130) de frein de stationnement d'essieu avant du système (128) de frein de stationnement pour freiner un essieu (118) avant du véhicule (100), si le signal (128) de fonctionnement signale une aptitude limitée à fonctionner d'un dispositif (116) de frein de service d'essieu avant du système (106) de frein de service sur l'essieu (118) avant et/ou on met à disposition le signal (138) d'actionnement d'un dispositif (134) de frein de stationnement de remorque du système (108) de frein de stationnement pour freiner une remorque (104) du véhicule (100), si le signal (128) de fonctionnement signale une aptitude limitée à fonctionner d'un dispositif (124) de frein de service de remorque du système (106) de frein de service de la remorque (104).

3. Procédé (300) suivant l'une des revendications précédentes, dans lequel, dans le stade (304) de la mise à disposition, en utilisant le signal (126) de décélération, on met à disposition un signal de frein de service pour le système (106) de frein de service, si le signal (128) de fonctionnement signale l'aptitude à fonctionner conforme aux prescriptions du système (106) de frein de service.

4. Procédé (300) suivant l'une des revendications précédentes, dans lequel, dans le stade (304) de la mise à disposition, on met à disposition un signal de frein de stationnement pour le système (108) de frein de stationnement, si le signal (126) de décélération signale une demande de frein de stationnement.

5. Module de frein à pied d'un système (102) de frein d'un véhicule (100), le système (102) de frein comprenant un appareil (112) de commande d'un système (106) de frein de service et un appareil (114) de commande d'un système (108) de frein de stationnement, le module (110) de frein à pied ayant les caractéristiques suivants :
au moins une interface numérique de communication avec les appareils (112, 114) de commande ;
un dispositif (200) de lecture pour lire un signal (126) de décélération pour le système (106) de frein de service, représentant une demande de décélération du véhicule (100), et un signal (128) de fonctionnement représentant une aptitude à fonctionner du système (106) de frein de service, le signal (126) de décélération représentant un signal électrique détecté en utilisant le module de frein à pied et le signal (128) de fonctionnement représentant un signal électrique produit par l'appareil (112) de commande du système (106) de frein de service et lu, par l'intermédiaire de la au moins une interface numérique, pour l'appareil (112) de commande du système (106) de frein de service ; et
un dispositif (202) de mise à disposition pour mettre à disposition un signal (138) d'actionnement électrique du système (108) de frein de stationnement, en utilisant le signal (126) de décélération, si le signal (128) de fonctionnement signale une aptitude à fonctionner au moins limitée du système (106) de frein de service, le signal (138) d'actionnement électrique étant mis à disposition, par l'intermédiaire de la au moins une interface numérique, pour l'appareil (114) de commande du système (108) de frein de stationnement.

6. Système (102) de frein d'un véhicule (100), le système (102) de frein ayant les caractéristiques suivantes :
un système (106) de frein de service ;
un système (108) de frein de stationnement ; et
un module de frein à pied suivant la revendication 5, le module de frein à pied étant relié par des interfaces au système (106) de frein de service et au système (108) de frein de stationnement.
